# EUROPÄISCHE PATENTSCHRIFT

(11) **EP 0 920 901 B1**
(45) Veröffentlichungstag und Bekanntmachung des Hinweises auf die Patenterteilung: **08.05.2002**
(21) Anmeldenummer: 98114780.4
(22) Anmeldetag: 06.08.1998
(51) Int. Cl.: B01D 53/14, B01D 53/48, B01D 53/62

(54) **Verfahren zur Entfernung von CO2 und Schwefelverbindungen aus technischen Gasen, insbesondere aus Erdgas und Roh-Synthesegas**
Process for removing carbon dioxide and sulfur compounds from a technical gas, especially from natural gas and raw synthesis gaz
Méthode pour éliminer du dioxide de carbon et des composés soufrés d'un gaz technique, en particulier d'un gaz naturel et d'un gaz de synthèse brut

(30) Priorität: 05.12.1997 DE 19753903
(43) Veröffentlichungstag der Anmeldung: 09.06.1999
(73) Patentinhaber: Krupp Uhde GmbH, 44141 Dortmund (DE)
(72) Erfinder: Gross, Manfred, 46282 Dorsten (DE); Kolbe, Bärbel, 58452 Witten (DE); Menzel, Johannes, 46045 Oberhausen (DE); Pohl, Werner, 45149 Essen (DE)
(74) Vertreter: Albrecht, Rainer Harald, Dr.-Ing.

(56) Entgegenhaltungen:
- EP-A- 0 207 199
- EP-A- 0 558 019
- GB-A- 2 167 397
- GB-A- 2 167 738
- US-A- 3 773 896
- US-A- 4 080 424
- US-A- 4 345 918
- US-A- 4 530 704
- US-A- 4 545 965

## Beschreibung

Die Erfindung betrifft ein Verfahren zur Entfernung von CO₂ und Schwefelverbindungen technischen Gasen, insbes. aus Erdgas und Roh-Synthesegas wobei als Absorbens eine Mischung aus N-Formylmorpholin (NFM) und N-Acetylmorpholin (NAM) verwendet wird, bei dem das mit den Sauergaskomponenten beladene Absorbens regeneriert sowie in den Absorber zurückgeführt wird. Schwefelverbindungen meint insbesondere H₂S sowie in Erdgas und Roh-Synthesegas vorhandene organische Schwefelverbindungen. Zu den Sauergaskomponenten, die als störende Komponente ebenfalls aus dem technischen Gas durch Absorption entfernt werden kann, gehört auch HCN sowie Wasserdampfanteile.

Erdgas besteht zum überwiegenden Teil aus Methan, das aber von weiteren Stoffen begleitet wird, die teils ähnlicher, d. h. organischer Natur, teils völlig andersartig sind und die Eigenschaften des Erdgases entsprechend beeinflussen. Je nach Lagerstätte enthält ein Erdgas auch saure Gaskomponenten in störender Konzentration, die vor der Weiterleitung und wirtschaftlichen Verwendung des Erdgases abgetrennt werden müssen. Was als störend gelten muß, ist bei den einzelnen Komponenten sehr unterschiedlich. CO₂, das in erster Linie als Ballast anzusehen ist, der die Fernleitung unnötig verteuert und den Heizwert herabsetzt, wirkt zusammen mit Wasser korrosiv. Man toleriert CO₂ oft bis etwa 2 Vol%. H₂S ist hochgiftig und führt bei den im Erdgasbetrieb üblichen hohen Drücken schon in geringen Konzentrationen zu gefährlichen Korrosionen. Beispielsweise kann wasserstoff-induzierte Spannungsrißkorrosion auftreten, wodurch die Gasfernleitung bersten kann. Man kann daher im allgemeinen nur Spuren von wenigen ppm zulassen. Bei den etwas weniger gefährlichen organischen Schwefelverbindungen, die bei gleichzeitiger Anwesenheit von H₂S und CO₂ auch meistens in geringen Mengen zu finden sind, liegt die zulässige Grenze zumeist 1 bis 2 Zehnerpotenzen höher.

Aus US 3 773 896 ist die Verwendung einer Mischung von N-Formylmorpholin (NFM) und N-Acetylmorpholin (NAM) als Absorptionsmittel für H₂S und CO₂ bekannt. Durch thermische Regenerierung bei einer Temperatur von 80 °C können 70 bis 80 % der absorbierten Schwefelverbindungen und 55 bis 65 % des absorbierten CO₂ aus dem Absorbens abgetrennt werden. Die begrenzte Desorption der gelösten Gase aus dem beladenen Absorbens ist nachteilig, da die in Lösung bleibenden Gasanteile die Absorption der Gase aus dem Rohgas behindern und niedrige Restkonzentrationen im gereinigten Gas nicht ermöglichen. Ferner ist zur Abtrennung der Sauergaskomponenten ein hoher Absorptionsmittelumlauf erforderlich.

Eine große Zahl weiterer physikalischer Absorptionsmittel und chemischer Absorptionsmittel zur Abtrennung von CO₂ und H₂S aus technischen Gasen, insbesondere auch aus Erdgasen, sind bekannt (A. Kohl et al; "Gaspurification", 4. Auflage, 1985; Stephen A. Newman; "Acid and Sour Gas Treating Processes", Gulf Publishing Comp., 1985). Als physikalische Absorptionsmittel werden u. a. Selexol, Propylencarbonat, Methanol u. dgl. eingesetzt. Die bekannten physikalischen Absorptionsmittel haben den Nachteil, daß ein erheblicher Anteil der Wertstoffkomponenten aus dem Gas mitabsorbiert wird. Das trifft insbes. auf Erdgase zu, bei denen Methan und höhere Kohlenwasserstoffe mit absorbiert werden. Ein Teil der im Absorbens gelösten Kohlenwasserstoffe kann zwar durch Entspannung freigesetzt und wieder zurückgewonnen werden, indem der bei der Entspannung freigesetzte Gasstrom verdichtet und dem Rohgasstrom vor Eintritt in den Absorber wieder zugeführt wird, jedoch ist die Rückführung mit einem zusätzlichen Energieaufwand für die Verdichtung des Gasstromes verbunden und vergrößert außerdem den Volumenstrom, der dem Absorber zugeführt wird. Im Ergebnis verschlechtert sich der energetische Wirkungsgrad des Verfahrens. Zur Klasse der chemischen Absorptionsmittel gehören u. a. Ethanolamine, Alkalisalzlösungen u. dgl.. Chemische Absorptionsmittel erfordern gegenüber physikalischen Absorbentien einen deutlich höheren Energiebedarf für die Regeneration, und desweiteren ist es mit chemischen Absorbentien ökonomisch nicht möglich, organische Schwefelverbindungen aus dem Rohgas zu entfernen. Schließlich sind einige der chemischen Absorptionsmittel sehr korrosiv, so daß Korrosionsinhibitoren zugesetzt werden müssen oder die Anlage aus korrosionsbeständigen Sonderwerkstoffen gefertigt werden muß.

Bei der Behandlung von Erdgasen mit hohem CO₂-Gehalt, der z. B. 40 Vol% betragen kann, fallen entsprechend große Mengen an freigesetztem CO₂ an, das zur Vermeidung von Emissionen unter einem Druck von meist 200 bis 400 bar in Schluckbohrungen eingebracht wird. Das bei der Desorption mit einem Druck von 1 bis 2 bar anfallende Sauergas wird mittels Kompressoren auf den benötigten Kavernendruck komprimiert. Geringere Betriebs- und Investitionskosten sind möglich, wenn es gelingt, die Sauergase bei einem höheren Betriebsdruck aus dem Absorbens abzutrennen.

Im Lichte der vorstehend erläuterten Problematik liegt der Erfindung die Aufgabe zugrunde, ein Verfahren der eingangs beschriebenen Art anzugeben, welches eine selektive Abtrennung der Sauergaskomponenten, insbes. von CO₂ und Schwefelverbindungen, aus einem Kohlenwasserstoffe enthaltenden technischen Gas bei hohem Absorptionsvermögen gewährleistet.

Zur Lösung dieser Aufgabe lehrt die Erfindung, daß das zu reinigende Gas durch Absorption in einem Adsorber bei einem Betriebsdruck von 10 bis 150 bar von Sauergaskomponenten befreit wird und daß das Absorbens mit einer Temperatur von -20 °C bis 0°C im Absorber eingesetzt wird. Das Mischungsverhältnis reicht, jeweils auf 100 Massenteile bezogen, von 10 bis 90 Massenteile NFM und 90 bis 10 Massenteile NAM. Gemäß einer bevorzugten Ausführung enthält das Absorbens 30 bis 70 Massenteile NFM und 70 bis 30 Massenteile NAM, jeweils zu 100 Massenteilen ergänzt. Das Absorbens kann außerdem auch 0,1 bis 5 Massenteile H₂O enthalten. Die Erfindung beruht auf der Erkenntnis, daß die erfindungsgemäße Absorbensmischung aus N-Formylmorpholin und N-Acetylmorpholin bei tiefen Temperaturen in dem angegebenen Temperaturbereich eine überraschend hohe Sauergaslöslichkeit in Verbindung mit einer besonders geringen Löslichkeit für Methan und höhere Kohlenwasserstoffe aufweist.

Aufgrund des Mischungsverhaltens von N-Formylmorpholin und N-Acetylmorpholin kann die Absorption von H₂S, CO₂ und ggf. weiteren Sauergaskomponenten bei tiefen Temperaturen, und zwar bis zu -20 °C durchgeführt werden, ohne daß das Absorbens fest wird oder eine Kristallausscheidung erfolgt. Bei den erfindungsgemäß eingesetzten tiefen Temperaturen wird eine überproportionale H₂S- und CO₂-Beladung in der Absorbenslösung erzielt. Das ermöglicht es, mit einem kleinen Absorbensmittelumlauf zu arbeiten, was sich hinsichtlich der Energie- und Investitionskosten vorteilhaft auswirkt. Das erfindungsgemäße Verfahren erlaubt ferner einen hohen Regenerationsgrad des Absorbens. Überraschenderweise können durch thermische Regeneration des Absorbens bei Temperaturen von weniger als 80 °C in etwa 85 % bis 99 % des im Absorbens gelösten H₂S und 70 bis 99,9 % des im Absorbens gelösten CO₂ desorbiert werden. Eine Reinigung des Rohgases auf Restgehalte von 1 Vol-ppm H₂S und 10 Vol-ppm CO₂ ist möglich.

Das erfindungsgemäße Verfahren eignet sich insbesondere für technische Gase mit einem hohen Sauergasanteil von 10 Mol.% bis 90 Mol.% und wird vorzugsweise zur Reinigung von Gasen mit einem CO₂-Anteil von mehr als 20 Mol.% und für H₂S-Anteile von mehr als 3 Mol.% eingesetzt, da hier die überproportionale Sauergaslöslichkeit bei tiefen Temperaturen vorteilhaft genutzt werden kann. Im Rahmen der Erfindung wird die Absorption in einem Temperaturbereich durchgeführt, der sich von -20 °C bis 0 °C erstreckt.

Vorzugsweise wird die Absorption bei Temperaturen zwischen -15°C und 0°C durchgeführt.

Für die Absorption eignen sich Absorber mit einer Füllkörperschüttung, einer strukturierten Packung oder Böden. Zum Abführen der Absorptionswärme ist eine Zwischenkühlung des Absorbens im Absorber zweckmäßig. Zu diesem Zweck lehrt die Erfindung, daß zumindest ein flüssiger Seitenstrom auf einen Zwischenboden abgezogen, gekühlt und dem Absorber unterhalb des Zwischenbodens wieder zugeführt wird.

Für die Regeneration des mit Sauergaskomponenten beladenen Absorbens bieten sich mehrere Verfahrensvarianten an. Ihre Auswahl richtet sich danach, welche Sauergaskonzentration im Reingas toleriert werden kann.

Eine Ausführungsform des erfindungsgemäßen Verfahrens sieht vor, daß das mit den Sauergaskomponenten beladene Absorbens aus dem Sumpf des Absorbers abgezogen, erwärmt und einem Flashbehälter zugeführt wird, der mit erhöhtem, maximal dem Betriebsdruck des Absorbers entsprechenden Druck betrieben wird, wobei in dem Flashbehälter ein unter dem Flashbehälterdruck stehender Sauergasstrom freigesetzt und zur Vorwärmung des aus dem Absorbersumpf abgezogenen Absorbensstromes genutzt wird. Das Absorbens wird aus dem Flashbehälter zur weiteren Regenerierung in einen mit niedrigerem Druck betriebenen, beheizten und/oder mit Strippdampf oder Strippgas beaufschlagten Desorber entspannt. Das im Desorber thermisch regenerierte Absorbens kann im Wärmetausch mit dem dem Flashbehälter zugeführten beladenen Absorbens gekühlt und nach einer weiteren Rückkühlung auf die für den Absorber benötigte Betriebstemperatur dem Absorber zugeführt werden. Zur Vermeidung von Absorbensverlusten ist es zweckmäßig, die Sauergasströme, welche den Flashbehälter und den Desorber über Kopf verlassen, durch partielle Kondensation zu reinigen und das anfallende Kondensat in den Absorbenskreislauf zurückzuführen. Die beschriebene Verfahrensvariante ermöglicht es, den größten Teil des im Absorbens gelösten Sauergases bei Drücken, die in der Nähe des Absorptionsdruckes sind, freizusetzen. Dies hat Vorteile, wenn das Sauergas unter Druck durch sogenannte Schluckbohrungen in unterirdische Lagerstätten eingebracht werden soll. Ferner läßt sich bei der beschriebenen Verfahrensvariante durch die an die Entspannung im Flashbehälter anschließende Desorption mit thermischer Regenerierung eine praktisch vollständige Entfernung von H₂S, CO₂ und organischen Schwefelkomponenten aus dem sauergashaltigen Rohgas erreichen. Eine Entfernung der beschriebenen Sauergaskomponenten bis auf wenige Vol-ppm ist möglich.

Eine andere Variante des erfindungsgemäßen Verfahrens sieht vor, daß das mit den Sauergaskomponenten beladene Absorbens durch mehrstufige Entspannung in einer Anordnung aus mehreren in Reihe geschalteten Flashbehältern von den Sauergaskomponenten befreit und gleichzeitig gekühlt wird. In weiterer Ausgestaltung lehrt die Erfindung, daß das in den Flashbehältern heruntergekühlte Absorbens durch Kühler geführt wird, in denen das im Absorber befindliche Absorbens während der Absorption zwischengekühlt und/oder das zu reinigende Gas vor Eintritt in den Absorber gekühlt wird. Die beschriebene Verfahrensvariante bietet sich vor allem dann an, wenn im Reingas höhere Gehalte an Sauergaskomponenten zulässig sind, und eignet sich, um Erdgas mit hohem CO₂-Gehalt so weit aufzubereiten, daß das Erdgas eine Pipelinespezifikation, die z.B. ca. 2 Vol% CO₂ zuläßt, erfüllt. Bei der Entspannung des Absorbens wird dem Absorbens Desorptionswärme für die Desorption der gelösten Gase entzogen. Dieser Effekt wird zur Abkühlung des Absorbens genutzt. Das Verfahren mit mehrstufiger Entspannung ermöglicht es, das Absorbens auf die für das erfindungsgemäße Verfahren benötigten niedrigen Temperaturen zurückzukühlen, ohne daß eine zusätzliche Kälteanlage erforderlich ist.

Im folgenden wird die Erfindung anhand von zwei lediglich Ausführungsbeispiele darstellenden Zeichnungen erläutert.
Es zeigen
- Fig. 1: das Anlagenschema zur Durchführung des erfindungsgemäßen Verfahrens,
- Fig. 2: das Anlagenschema für eine weitere Ausführung des erfindungsgemäßen Verfahrens.

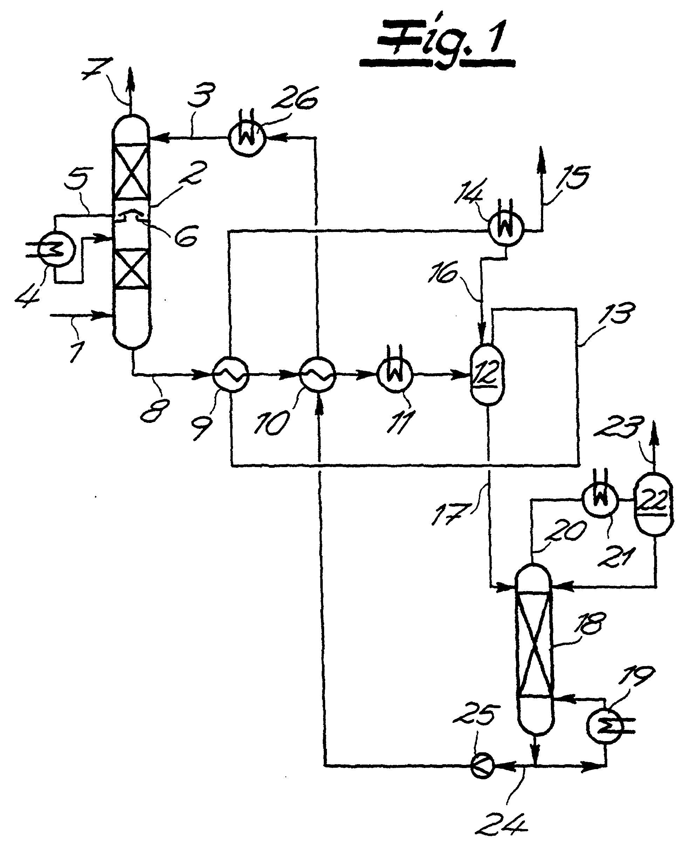

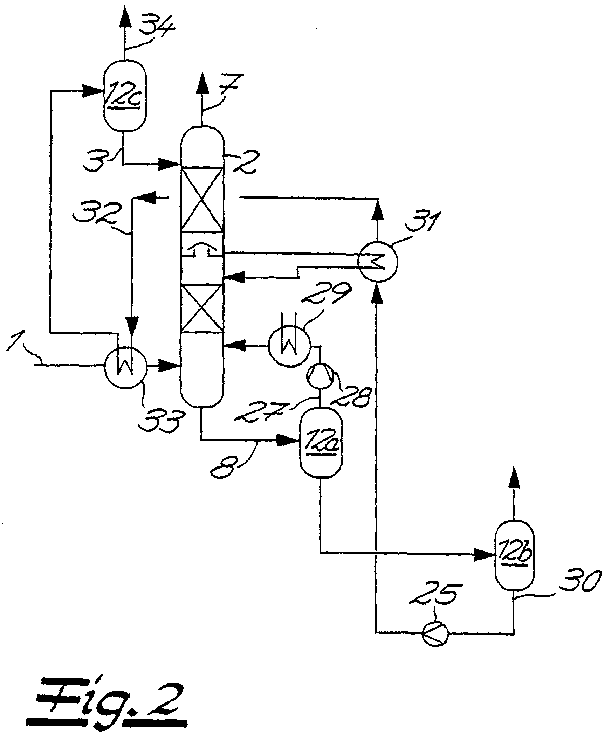

Das in den Fig. 1 und 2 dargestellte Verfahren dient zur Entfernung von Sauergaskomponenten, insbesondere CO₂, H₂S und organischen Schwefelverbindungen, aus Kohlenwasserstoffe enthaltenen technischen Gasen, z. B. aus Erdgas. Das zu reinigende Gas 1 wird durch Absorption in einem Absorber 2 bei einem Betriebsdruck von 10 bis 150 bar von den Sauergaskomponenten befreit. Als Absorbens wird eine Mischung aus N-Formylmorpholin (NFM) und N-Acetylmorpholin (NAM) verwendet. Das Mischungsverhältnis kann zwischen 10 Massenteilen bis 90 Massenteilen NFM und 90 Massenteilen bis 10 Massenteilen NAM, jeweils auf 100 Massenteile ergänzt, variiert werden. Vorzugsweise enthält das Absorbens 30 bis 70 Massenteile NFM und 70 bis 30 Massenteile NAM, jeweils auf 100 Massenteile ergänzt. Außerdem können 0,1 bis 5 Massenteile H₂O vorgesehen sein. Das Absorbens wird durch eine Leitung 3 am Kopf des Absorbers 2 zugeführt, der als Absorptionskolonne mit Füllkörperschüttung, strukturierter Packung oder mit Böden ausgebildet ist. Die Absorption wird bei einer Temperatur von -20 °C bis 0°C durchgeführt, wobei ein Temperaturbereich von -15 °C bis 0 °C bevorzugt ist. Das mit den Sauergaskomponenten beladene Absorbens wird regeneriert sowie in den Absorber zurückgeführt.

Bei der in Fig. 1 dargestellten Ausführung des Verfahrens wird ein Rohgasstrom 1, der einen hohen Sauergasanteil mit z. B. 50 bis 90 Vol% CO₂ aufweisen kann, dem Sumpf des Absorbers 2 zugeführt. Im Gegenstrom werden die im Rohgas enthaltenen Sauergaskomponenten mittels Absorbens, welches aus einer Mischung von NFM und NAM besteht, absorbiert. Um die Absorptionswärme abzuführen, sind ein oder mehrere Zwischenkühler 4 zur Kühlung der in der Absorptionskolonne 2 ablaufenden Absorbenslösung vorgesehen. Das zu kühlende Absorbens wird als flüssiger Seitenstrom 5 auf einem Zwischenboden 6 des Absorbers 2 abgezogen, gekühlt und dem Absorber 2 unterhalb des Zwischenbodens 6 wieder zugeführt. Das gereinigte Gas 7 wird am Kopf des Absorbers 2 abgezogen. Das mit Sauergaskomponenten beladene Absorbens 8 wird aus dem Sumpf des Absorbers 2 abgezogen, in Wärmetauschern 9, 10, 11 erwärmt und einem Flashbehälter 12 zugeführt, der mit erhöhtem, maximal dem Betriebsdruck des Absorbers 2 entsprechendem Druck betrieben wird. Der im Flashbehälter 12 eingestellte Druck ist vorzugsweise nur wenig niedriger als der Betriebsdruck des Absorbers 2 . Die Abtrennung der gelösten Sauergase erfolgt durch eine intensive Vorwärmung des beladenen Absorbens 8. Dadurch ist es möglich, je nach der Sauergaskonzentration im Rohgasstrom 1, den größten Teil des in dem beladenen Absorbens 8 gelösten Sauergases bei einem Druck, der dem Betriebsdruck des Absorbers 2 entspricht oder nur geringfügig kleiner ist, zu flashen. Der den Flashbehälter 12 verlassende Sauergasstrom 13 wird für die Vorwärmung des beladenen Absorbensstromes 8 mittels des Wärmetauschers 9 genutzt, in einem Kühler 14 vor einer etwaigen Kompression auf einen zum Einbringen in Schluckbohrungen erforderlichen Druck von 200 bis 400 bar abgekühlt und als Sauergasstrom 15 abgegeben. Das im Sauergasstrom 15 dampfförmig vorhandene Lösungsmittel wird auskondensiert und als Kondensatstrom 16 in den Absorbenskreislauf zurückgeführt. Das mit Sauergaskomponenten restbeladene Absorbens 17 wird zur weiteren Regenerierung auf einen niedrigeren Druck in einen Desorber 18 entspannt, wobei der restliche Teil der Sauergase freigesetzt wird.

Für die Desorption wird zweckmäßig eine Kolonne 18 verwendet, die mit einer Füllkörperschüttung, einer strukturierten Packung oder mit Böden ausgestattet ist. In einem Reboiler 19 wird indirekt mittels Dampf oder einem anderen geeigneten Wärmeträger erreicht, daß das Absorbens thermisch regeneriert wird. Die über Kopf der Desorptionskolonne 18 abgezogene sauergasreiche Dampfphase 20 wird im Kondensator 21 gekühlt. In einem Separator 22 werden Dampf und Flüssigphase getrennt, wobei die Flüssigphase wieder zum Kopf der Desorptionskolonne 18 zurückgeführt wird und der Sauergasstrom 23 zur weiteren Verarbeitung oder zum Einbringen in Schluckbohrungen zur Verfügung steht.

Die von den gelösten Sauergaskomponenten nahezu vollständig regenerierte Absorbenslösung 24 wird am Sumpf der Desorptionskolonne 18 abgezogen und mit einer Kreislaufpumpe 25 zur Absorptionskolonne 2 zurückgefördert. Die Wärme der heißen regenerierten Lösung 24 wird durch einen Wärmetauscher 10 an den beladenen Absorptionsstrom 8 übertragen. Vor Eintritt in den Absorber 2 wird das Absorbens 24 mittels eines Kühlers 26 auf die vorgesehene Absorptionstemperatur von -20 °C bis 0 °C gebracht, so daß das Absorbens regeneriert und gekühlt für eine erneute Entfernung der Sauergaskomponenten im Absorber 2 zur Verfügung steht.

Bei der in Fig. 2 dargestellten Ausführung des erfindungsgemäßen Verfahrens wird das mit den Sauergaskomponenten beladene Absorbens 8, welches aus dem Sumpf des Absorbers 2 abgezogen wird, durch mehrstufige Entspannung in eine Anordnung aus mehreren in Reihe geschalteten Flashbehältern 12a, 12b, 12c von den Sauergaskomponenten befreit und gleichzeitig gekühlt. Das beladene Absorbens 8 wird zunächst in einen Flashbehälter 12a geführt, dessen Betriebsdruck so ausgelegt ist, daß bei der Entspannung des beladenen Absorbens in diesem Flashbehälter 12a eine hauptsächlich Kohlenwasserstoffe enthaltende Gasphase 27 anfällt, die mittels eines Verdichters 28 auf den Betriebsdruck des Absorbers 2 verdichtet und nach einer Kühlung im Wärmetauscher 29 in den Absorber 2 zurückgeführt wird. Der Entspannungsdruck des zweiten Flashbehälters 12b ist so gewählt, daß eine starke Abkühlung des aus dem Flashbehälter 12b abgezogenen Absorbens 30 erfolgt. Das aus dem Flashbehälter 12b abgezogene Absorbens 30 wird zur Zwischenkühlung der im Absorber 2 befindlichen Absorbenslösung verwendet. Der Wärmeaustausch erfolgt in einem Zwischenkühler 31 analog, wie dies in Fig. 1 dargestellt ist. Das den oder die Zwischenkühler 31 verlassende vorgewärmte und teilbeladene Absorbens 32 kann anschließend zur Vorkühlung des Rohgases 1 mittels eines Vorkühlers 33 genutzt werden. Schließlich wird das teilbeladene Absorbens 32 vor Eintritt in den Absorber 2 in einem weiteren Flashbehälter 12c entspannt, wobei sich das Absorbens auf die für die Absorption erforderliche Betriebstemperatur abkühlt und von den noch gelösten Sauergaskomponenten befreit wird, die über Kopf des Flashbehälters als Sauergasstrom 34 abgezogen werden. Das den Flashbehälter 12c verlassende regenerierte und abgekühlte Absorbens wird wieder über die Leitung 3 am Kopf der Absorptionskolonne 2 aufgegeben, wo es erneut für die Entfernung der Sauergaskomponenten aus dem Rohgas 1 zur Verfügung steht.

## Patentansprüche

1. Verfahren zur Entfernung von CO₂ und Schwefelverbindungen aus technischen Gasen, insbesondere aus Erdgas und Roh-Synthesegas wobei als Absorbens eine Mischung aus N-Formylmorpholin (NFM) und N-Acetylmorpholin (NAM) verwendet wird bei dem das mit den Sauergaskomponenten beladene Absorbens regeneriert sowie in den Absorber zurückgeführt wird, **dadurch gekennzeichnet, daß**
das zu reinigende Gas durch Absorption in einem Absorber bei einem Betriebsdruck von 10 bis 150 bar von Sauergaskomponenten befreit wird und daß das Absorbens mit einer Temperatur von -20 °C bis 0 °C im Absorber eingesetzt wird.

2. Verfahren nach Anspruch 1, **dadurch gekennzeichnet, daß** das Absorbens 30 bis 70 Massenteile N-Formylmorpholin und 70 bis 30 Massenteile N-Acetylmorpholin, jeweils auf 100 Massenteile bezogen, enthält.

3. Verfahren nach Anspruch 1 oder 2, **dadurch gekennzeichnet, daß** das Absorbens außerdem 0,1 bis 5 Massenteile H₂O enthält.

4. Verfahren nach einem der Ansprüche 1 bis 3, **dadurch gekennzeichnet, daß** das Absorbens mit einer Temperatur von -15 °C bis 0 °C zur Absorption eingesetzt wird.

5. Verfahren nach einem der Ansprüche 1 bis 4, **dadurch gekennzeichnet, daß** aus dem mit einer Füllkörperschüttung, einer strukturierten Packung oder Böden ausgerüsteten Absorber zumindest ein flüssiger Seitenstrom auf einem Zwischenboden abgezogen, gekühlt und dem Absorber unterhalb des Zwischenbodens wieder zugeführt wird.

6. Verfahren nach einem der Ansprüche 1 bis 5, **dadurch gekennzeichnet, daß** das mit den Sauergaskomponenten beladene Absorbens aus dem Sumpf des Absorbers abgezogen, erwärmt und einem Flashbehälter zugeführt wird, der mit erhöhtem, maximal dem Betriebsdruck des Absorbers entsprechendem Druck betrieben wird, wobei in dem Flashbehälter ein unter dem Flashbehälterdruck stehender Sauergasstrom freigesetzt und zur Vorwärmung des aus dem Absorbersumpf abgezogenen Absorbensstromes genutzt wird, daß das Absorbens aus dem Flashbehälter zur weiteren Regenerierung in einen mit niedrigem Druck betriebenen, beheizten und/oder mit Strippdampf oder Strippgas beaufschlagten Desorber entspannt wird.

7. Verfahren nach Anspruch 6, **dadurch gekennzeichnet, daß** das im Desorber thermisch regenerierte Absorbens im Wärmetausch mit dem, dem Flashbehälter zugeführten beladenen Absorbens, gekühlt und nach einer weiteren Rückkühlung auf die für den Absorber benötigte Betriebstemperatur dem Absorber zugeführt wird.

8. Verfahren nach Anspruch 6 oder 7, **dadurch gekennzeichnet, daß** die Sauergasströme, welche den Flashbehälter und den Desorber über Kopf verlassen, durch partielle Kondensation gereinigt werden und das anfallende Kondensat in den Absorbenskreislauf zurückgeführt wird.

9. Verfahren nach einem der Ansprüche 1 bis 5, **dadurch gekennzeichnet, daß** das mit den Sauergaskomponenten beladene Absorbens durch mehrstufige Entspannung in einer Anordnung aus mehreren in Reihe geschalteten Flashbehältern von den Sauergaskomponenten befreit und gleichzeitig gekühlt wird.

10. Verfahren nach Anspruch 9, **dadurch gekennzeichnet, daß** das in den Flashbehältern heruntergekühlte Absorbens durch Kühler geführt wird, mit denen das im Absorber befindliche Absorbens während der Absorption zwischengekühlt und/oder das zu reinigende Gas vor Eintritt in den Absorber gekühlt wird.

11. Verfahren nach Anspruch 10, **dadurch gekennzeichnet, daß** der Flashdruck mindestens eines Flashbehälters so ausgelegt wird, daß bei der Entspannung des beladenen Absorbens in diesem Flashbehälter eine hauptsächlich Kohlenwasserstoffe enthaltende Gasphase anfällt, die auf den Betriebsdruck des Absorbers verdichtet und nach einer Kühlung in den Absorber zurückgeführt wird.

## Claims

1. Process for the removal of CO₂ and sulphur compounds from industrial gases, in particular from natural gas and raw synthesis gas, in which
the gas to be treated is freed from acid gas components by absorption using morpholine derivatives in an absorber at a working pressure of 10 to 150 bar and
the absorbent, which is loaded with acid gas components, is regenerated and recycled to the absorber,
**characterised in that** a mixture of n-formyl morpholine (NFM) and n-acetyl morpholine (NAM) is used as absorbent, the absorbent being used at a temperature of between -20°C and 0°C in the absorber.

2. Process according to claim 1,
**characterised in that** the absorbent has a mass percentage rate of 30 to 70 n-formyl morpholine and of 70 to 30 n-acetyl morpholine.

3. Process according to claim 1 or 2,
**characterised in that** the absorbent also has a mass percentage rate of 0.1 to 5 H₂O.

4. Process according to one of the claims 1 to 3,
**characterised in that** the absorbent is used at a temperature of -15 to 0°C in the absorber.

5. Process according to one of the claims 1 to 4,
**characterised in that** at least one liquid bleed stream from the absorber, which is equipped with bulk packing, structured packing or trays, is withdrawn on a level with the intermediate tray, cooled and returned to the absorber below the intermediate tray.

6. Process according to one of the claims 1 to 5,
**characterised in that** the absorbent, which is loaded with acid gas components, is withdrawn from the bottom of the absorber, heated and passed to a flash vessel which is operated at increased pressure not in excess of the working pressure of the absorber. An acid gas stream at flash vessel pressure is released in the flash vessel and used for preheating the absorbent stream withdrawn from the absorber bottom. To enable the absorbent to be regenerated, the absorbent from the flash vessel is allowed to expand into a desorber which is operated at low pressure, heated and/or supplied with stripping steam or stripping gas.

7. Process according to claim 6,
**characterised in that** once the absorbent has been thermally regenerated in the desorber, it is cooled in a heat exchange process involving the loaded absorbent fed to the flash vessel, and after a final cooling stage in which it is cooled to the working temperature required in the absorber, the absorbent is recycled to the absorber.

8. Process according to claim 6 or 7,
**characterised in that** the acid gas streams leaving the head of the flash vessel and the desorber undergo partial condensation, the condensate obtained being recycled to the absorbent circulation system.

9. Process according to one of the claims 1 to 5,
**characterised in that** the absorbent loaded with acid gas components is freed from its acid gas components and cooled at the same time by multi-stage flashing in an arrangement of several flash vessels connected in series.

10. Process according to claim 9,
**characterised in that** the absorbent cooled in the flash vessels is passed through coolers in which the absorbent from the absorber undergoes intermediate cooling during absorption and/or the gas to be treated is cooled prior to entering the absorber.

11. Process according to claim 10,
**characterised in that** the flash pressure of at least one flash vessel is such that a gas phase, which mainly contains hydrocarbons, is obtained during the expansion of the loaded absorbent into this flash vessel. This gas phase is compressed to the working pressure of the absorber and recycled to the absorber after cooling.

## Revendications

1. Procédé pour l'élimination des oxydes d'azote et des composés sulfuriques contenus dans les gaz industriels, surtout dans le gaz naturel et le gaz brut de synthèse, procédé selon lequel
le gaz à traiter est soumis à une absorption à l'aide de dérivés de morpholine dans un absorbeur qui fonctionne à 10-150 bars, pour éliminer les composés de gaz acide, et que
l'absorbant chargé des composés de gaz acide est régénéré et retourné vers l'absorbeur,
**caractérisé en ce qu'**un mélange de n-morpholine formique (NFM) et de n-acétyl-morpholine (NAM) est mis en oeuvre comme absorbant à une température de -20°C à 0°C dans l'absorbeur.

2. Procédé selon la revendication 1,
**caractérisé en ce que** l'absorbant a un taux de pourcentage en masse de 30 à 70 de n-morpholine formique et un taux de pourcentage en masse de 70 à 30 de n-acétyl-morpholine.

3. Procédé selon la revendication 1 ou 2,
**caractérisé en ce que** l'absorbant a également un taux de pourcentage en masse de 0,1 à 5 de H₂O.

4. Procédé selon l'une quelconque des revendications 1 à 3,
**caractérisé en ce que** l'absorbant est mis en oeuvre pour la dite absorption à une température de -15°C à 0°C.

5. Procédé selon l'une quelconque des revendications 1 à 4,
**caractérisé en ce qu'**il y a au moins une prise de liquide soutirée d'un absorbeur qui est muni d'un corps de garnissage en vrac ou structuré ou de plateaux intérieurs, que le dit soutirage a lieu au niveau d'un plateau intermédiaire, et que ce courant est refroidi et puis retourné vers l'absorbeur au-dessous du plateau intermédiaire.

6. Procédé selon l'une quelconque des revendications 1 à 5,
**caractérisé en ce que** l'absorbant chargé des composés de gaz acide est soutiré du bas de l'absorbeur pour être rechauffé et ensuite véhiculé vers un récipient de flash fonctionnant à une pression élevée, c.-à-d. à la pression max. en service de l'absorbeur, qu'un courant de gaz acide est libéré au-dessous du dit récipient et utilisé pour le préchauffage du courant d'absorbant soutiré du bas de l'absorbeur et que l'absorbant provenant du récipient de flash est ensuite détendu dans un désorbeur chauffé et/ou alimenté en vapeur ou en gaz de stripping et fonctionnant à une pression moins élevée pour arriver à une régénération thermique de l'absorbant.

7. Procédé selon la revendication 6,
**caractérisé en ce que** l'absorbant régénéré thermiquement dans le désorbeur est refroidi à l'aide d'une échange de chaleur avec l'absorbant chargé et envoyé au récipient de flash et que l'absorbant ainsi refroidi est soumis a un refroidissement final visant à la température requise pour l'absorbeur pour que l'absorbant puisse entrer dans ce dernier.

8. Procédé selon la revendication 6 ou 7,
**caractérisé en ce que** les courants de gaz acide déchargés à la tête du récipient de flash et du désorbeur sont soumis à une condensation partielle et que le condensat obtenu est retourné vers le cycle de l'absorbant.

9. Procédé selon l'une quelconque des revendications 1 à 5,
**caractérisé en ce que** l'absorbant chargé des composés de gaz acide est soumis à une détente multi-étagée dans plusieurs récipients de flash connectés en série pour éliminer les composés de gaz acide et assurer un refroidissement simultané.

10. Procédé selon la revendication 9,
**caractérisé en ce que** l'absorbant refroidi dans le récipient de flash doit traverser des refroidisseurs qui permettent de procéder à un refroidissement intermédiaire de l'absorbant pendant l'absorption et/ou de refroidir le gaz à purifier avant son entrée dans l'absorbeur.

11. Procédé selon la revendication 10,
**caractérisé en ce que** la pression de flash appliquée dans un récipient au minimum est prévue de telle sorte que le flash dans le récipient de l'absorbant chargé produit en premier lieu une phase gazeuse d'hydrocarbures qui est ensuite comprimée à la pression en service de l'absorbeur pour être retournée vers l'absorbeur après le refroidissement.
